# EUROPEAN PATENT APPLICATION

(11) **EP 4 513 651 A1**
(43) Date of publication of application: **26.02.2025**
(21) Application number: 23824035.2
(22) Date of filing: 15.02.2023
(51) Int. Cl.: H01M 50/367, H01M 50/325, H01M 50/204, H01M 50/358, H01M 50/342, H01M 50/308, H01M 50/271

(54) **SECONDARY BATTERY PACK**

(30) Priority: 15.06.2022 KR 20220073088; 02.11.2022 KR 20220144784
(71) Applicant: LG Energy Solution, Ltd., Seoul 07335 (KR)
(72) Inventor: JANG, Byung Do, Daejeon 34122 (KR); KIM, Ki Young, Daejeon 34122 (KR); LEE, Hyoung Suk, Daejeon 34122 (KR)
(74) Representative: Plasseraud IP
(86) International application number: PCT/KR2023/002215
(87) International publication number: WO 2023/243805

(57) **Abstract**

The present invention relates to a secondary battery pack, and more particularly, to a secondary battery pack including frames supporting a plurality of secondary batteries.

The present invention provides a secondary battery pack including: a plurality of secondary batteries; a lower frame configured to support a lower portion of each of the plurality of secondary batteries; a side frame provided in plurality to be spaced apart from each other to vertically extend from the lower frame so as to define a plurality of separation spaces; and an upper frame provided above the side frame to open and close each of the plurality of separation spaces.

## Description

### TECHNICAL FIELD

### CROSS-REFERENCE TO RELATED APPLICATION

The present application claims the benefit of the priority of Korean Patent Application Nos. 10-2022-0073088, filed on June 15, 2022, and 10-2022-0144784, filed on November 02, 2022, which are hereby incorporated by reference in their entirety.

### TECHNICAL FIELD

The present invention relates to a secondary battery pack, and more particularly, to a secondary battery pack including frames supporting a plurality of secondary batteries.

### BACKGROUND ART

In recent, secondary batteries have attracted considerable attention as power sources for electric vehicles (EVs), hybrid electric vehicles (HEVs), and the like, which have been developed to solve limitations, such as air pollution, caused by existing gasoline and diesel vehicles that use fossil fuels.

While one or two to three or four secondary batteries are used in a small mobile device, a battery module in which a plurality of secondary battery cells are electrically connected to each other, or a battery pack in which a plurality of battery modules are electrically connected to each other is used due to needs for high power and large capacity in medium and large devices such as the electric vehicles.

For example, the battery module may be constituted by a plurality of secondary batteries, a busbar (or metal plate) for connecting the secondary batteries in series and/or parallel, a sensing assembly for sensing a voltage and temperature, an electric component for controlling charging/discharging, and a housing for accommodating the above components. Among the currently commercialized secondary batteries, one of the most spotlighted secondary batteries may be lithium secondary batteries, which are capable of being classified into can-type secondary batteries and pouch-type secondary batteries according to their shapes of exterior materials. Among them, the pouch-type secondary batteries are being widely used in medium and large-sized battery modules because of their high energy density and easy stacking.

As demands for secondary battery modules mounted on vehicles have recently increased, customers are requiring to increase in energy density of the secondary batteries within a limited space of the secondary battery module. In this case, there is a problem in that safety risks related to ignition and explosion of the secondary battery also increase together.

Particularly, when the secondary battery is ignited and exploded, a high-temperature gas may be discharged. In this case, when adjacent secondary batteries are continuously exposed to the high-temperature gas, chain ignition may be promoted, and thus, large explosion may occur.

Therefore, there is a need for technology development to solve the above problems.

### DISCLOSURE OF THE INVENTION

### TECHNICAL PROBLEM

The present invention has been made to solve the above problems, and an object of the present invention is to provide a secondary battery pack in which adjacent secondary batteries are isolated from a high-temperature gas even if a specific secondary battery is ignited to generate the high-temperature gas to prevent chain ignition from occurring.

### TECHNICAL SOLUTION

The present invention provides a secondary battery pack including: a plurality of secondary batteries; a lower frame configured to support a lower portion of each of the plurality of secondary batteries; a side frame provided in plurality to be spaced apart from each other to vertically extend from the lower frame so as to define a plurality of separation spaces; and an upper frame provided above the side frame to open and close each of the plurality of separation spaces.

The upper frame may be configured to selectively open and close the separation spaces according to a pressure difference between the inside and outside of the separation space.

The upper frame may include: a base part which is provided above the side frame and in which a plurality of gas discharge holes are defined to correspond to the positions of the separation spaces; and at least one opening/closing part coupled to the base part and configured to open or close the gas discharge hole at a position corresponding to the gas discharge hole.

The upper frame may be coupled to the base part and be provided above the opening/closing part so as to be spaced a predetermined distance from the opening/closing part.

The secondary battery pack may further include a gas exhaust frame coupled to the lower frame and configured to exhaust a gas discharged from the gas discharge hole to the outside.

The base part may have at least one gas movement holes through which the gas discharged from the gas discharge hole moves, and the gas exhaust frame may be configured to communicate with the gas movement hole so as to exhaust the gas moving from the gas movement hole to the outside.

The gas exhaust frame may include: a body part having an accommodation space therein; and a rupture part coupled to the body part so as to be ruptured when a pressure of the accommodation space is equal to or greater than a predetermined pressure.

The body part may have at least one communication hole, through which the gas movement hole and the accommodation space communicate with each other, in one region and at least one exhaust hole, through which a gas of the accommodation space is exhausted to the outside, in the other region, and the rupture part may be provided at a position corresponding to the exhaust hole.

The gas discharge hole may extend along a longitudinal direction of the secondary battery in the base part.

The gas discharge hole may extend along an arrangement direction of the secondary battery in the base part.

The opening/closing part may include: a fixed part fixedly coupled to the base part; and a rotatable part rotatably coupled to the fixed part to open and close the gas discharge hole.

The fixed part may be fixedly coupled to the base part by welding or bolting.

At least one side frame of the plurality of side frames may have a groove recessed inward in a surface facing the secondary battery.

### ADVANTAGEOUS EFFECTS

In the present invention, the side frame may define the plurality of separation spaces, and the plurality of secondary batteries may be disposed to be divided into a predetermined number in the separation spaces to prevent the adjacent secondary batteries from being exposed to the high-temperature gas even if the specific secondary battery is ignited to generate the high-temperature gas, thereby preventing the chain ignition of the secondary batteries from occurring.

In addition, the present invention may further include the gas exhaust frame for discharging the gas generated from the plurality of secondary batteries to the outside. Thus, since the gas exhaust frame provides one gas discharge path to increase in free volume in which the gas flows, thereby reducing the maximum pressure in the ignition, there may be the effect of minimizing the deformation and destruction of the frame structure.

In addition, the present invention may include one exhaust hole and one rupture part in the gas exhaust frame to reduce the number of components of the rupture part, thereby reducing the manufacturing and management costs.

### BRIEF DESCRIPTION OF THE DRAWINGS

FIG. 1 is an exploded perspective view illustrating a secondary battery pack according to Embodiment 1 of the present invention.
FIG. 2 is a partial cross-sectional view illustrating the secondary battery pack of FIG. 1.
FIG. 3a is a plan view illustrating a state in which an opening/closing part closes a separation space in a base part constituting the secondary battery pack of FIG. 1.
FIG. 3b is a plan view illustrating a state in which the opening/closing part opens the separation space in the base part constituting the secondary battery pack of FIG. 1.
FIG. 4a is a cross-sectional view illustrating a state in which the opening/closing part closes the separation space in an upper frame constituting the secondary battery pack of FIG. 1.
FIG. 4b is a cross-sectional view illustrating a state in which the opening/closing part opens the separation space in the upper frame constituting the secondary battery pack of FIG. 1.
FIG. 5 is schematic conceptual view illustrating a gas flow path of the secondary battery pack of FIG. 1.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

A secondary battery pack 100 according to the present invention may include: a plurality of secondary batteries 110; a lower frame 120 supporting a lower portion of each of the plurality of secondary batteries 110; a side frame 130 provided in plurality, which are spaced apart from each other to extend upward from the lower frame 120 so as to define a plurality of separation spaces; and an upper frame 140 provided above the side frame 130 to open and close each of the plurality of separation spaces.

Here, the secondary battery 110 may include an electrode assembly and a battery case accommodating the electrode assembly. In addition, the electrode assembly may have a structure in which positive electrode collector/positive electrode active material layer/separator/negative electrode active material layer/negative electrode collector are sequentially stacked so that the positive electrode active material layer disposed one surface of the separator faces the negative electrode active material layer disposed on the other surface of the separator. In addition, the battery case may have various shapes and materials such as a cylindrical shape, a prismatic shape, and a pouch shape.

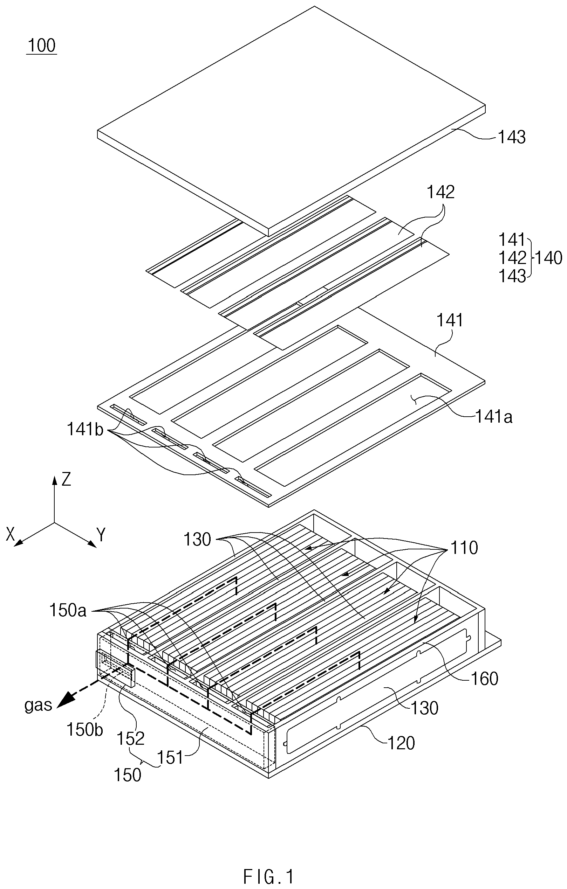

The secondary battery 110 may be provided in plurality. In this case, the plurality of secondary batteries 110 may be arranged in one direction. For example, as illustrated in FIG. 1, the secondary batteries 110 may be arranged side by side along one direction (Y direction in FIG. 1). In addition, the secondary batteries 110 arranged side by side may be seated on the lower frame 120.

Specifically, the lower frame 120 may be configured to support the lower portion of each of the plurality of secondary batteries 110 and may have various configurations. For example, the lower frame 120 may have various materials and shapes.

The plurality of side frames 130 may extend upward (Z direction in FIG. 1) on the lower frame 120 to support side surfaces of the secondary batteries 110. Here, the side frame 130 may be provided in plurality, which are spaced apart from each other to define the plurality of separation spaces from the lower frame 120. In addition, the secondary batteries 110 may be disposed to be divided into a predetermined number in the separation spaces. That is, the plurality of secondary batteries 110 may be disposed to be isolated by a predetermined number by the side frames 130.

In at least one of the plurality of side frames 130, a groove 130a recessed inward may be defined in a surface facing the secondary battery 110.

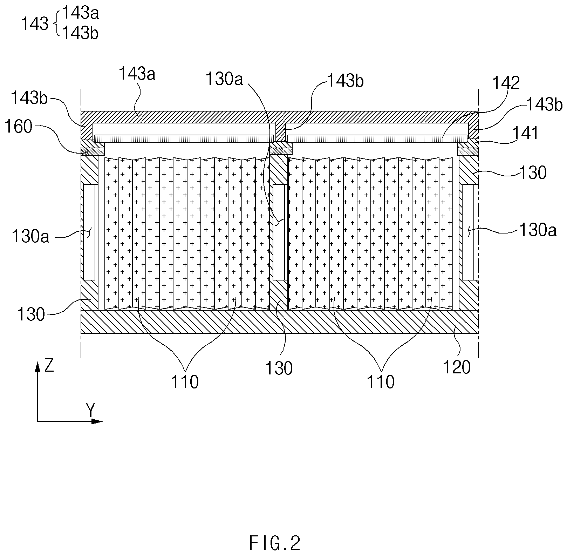

Specifically, as illustrated in FIG. 2, in the side frame 130, a groove 130a recessed inward may be defined in a surface facing the secondary battery 110. In this case, since a contact area between the side frame 130 and the secondary battery 110 is reduced, there is an effect of minimizing heat transfer between the secondary batteries 110 isolated with one side frame 130 therebetween.

The groove 130a may be defined in various shapes and sizes. For example, the groove 130a may extend along a height direction of the secondary battery 110 (Z direction in FIG. 2) .

The upper frame 140 capable of opening or closing each of the plurality of separation spaces may be provided above the side frame 130.

Specifically, as illustrated in FIGS. 1 and 2, the upper frame 140 may be provided above the side frame 130 and be provided to open and close each of the plurality of separation spaces. For example, the upper frame 140 may selectively open and close the separation spaces according to a pressure difference between the inside and outside of the separation space.

In more detail, when one of the plurality of secondary batteries 110 is ignited, the upper frame 140 may open the separation space in which the ignited secondary battery 110 belongs to release a gas in the separation space. Here, the upper frame 140 may close the separation space other than the separation space in which the ignited secondary battery 110 belongs, and thus, the secondary batteries 110 disposed in the other separation space may not be exposed to a high-temperature gas. Thus, there is an effect of preventing chain ignition of the secondary batteries 110.

The upper frame 140 may have various structures.

For example, as illustrated in FIGS. 2 to 3b, the upper frame 140 may include: a base part 141 which is provided above the side frame 130 and in which a plurality of gas discharge holes 141a are defined to correspond to positions of the separation spaces; and at least one opening/closing part 142 coupled to the base part 141 to open or close the gas discharge holes 141a at a position corresponding to the gas discharge holes 141a.

Here, the base part 141 may be a configuration which is provided above the side frame 130 and in which the plurality of gas discharge holes 141a are defined to correspond to the positions of the separation spaces and may have various configurations.

For example, the base part 141 may have a plate shape in which the plurality of gas discharge holes 141a are defined side by side. Here, as illustrated in FIG. 2, a gasket 160 for improving watertightness of the secondary battery pack 100 may be further provided between the base part 141 and the side frame 130. In this case, the gasket 160 may have the same or similar shape as the base part 141, and a through-hole penetrated vertically may also be defined in a region corresponding to the gas discharge hole 141a of the base part 141.

In addition, the gas discharge hole 141a may be defined in various manners in the base part 141.

In this case, the gas discharge hole 141a may have various sizes and shapes depending on the position of the separation space and an area of the separation space.

Specifically, the gas discharge hole 141a may extend along a longitudinal direction (X direction in FIG. 1) of the secondary battery 110 on the base part 141 or may extend along the arrangement direction (Y direction in FIG. 1) of the plurality of secondary batteries 110 on the base part 141.

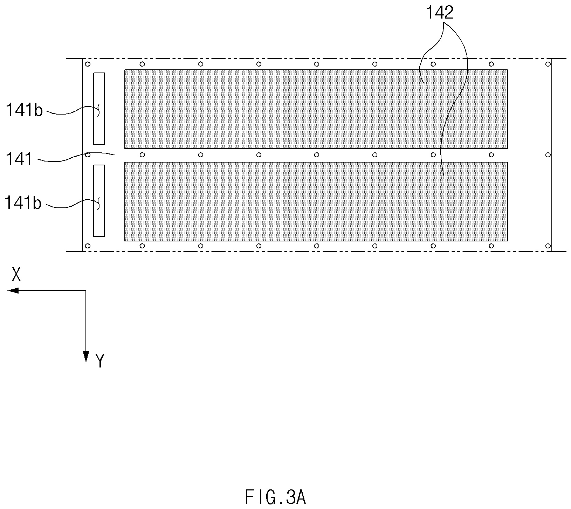

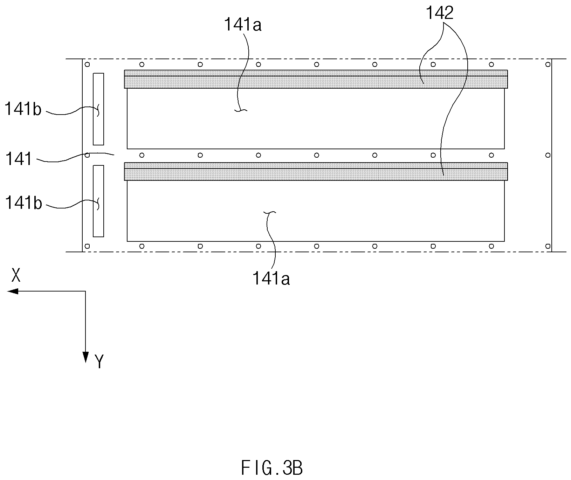

As illustrated in FIGS. 3a and 3b, the base part 141 may have at least one gas movement hole 141b through which a gas discharged from the gas discharge hole 141a moves.

Here, the gas movement hole 141b may be understood as a configuration that communicates with a communication hole 150a of the gas exhaust frame 150 to be described later so that the gas discharged from the gas discharge hole 141a moves to the communication hole 150a of the gas exhaust frame 150.

The gas movement holes 141b may be provided in plurality to correspond to the number of the plurality of gas discharge holes 141a. In addition, one gas movement hole 141b may be provided to correspond to one gas discharge hole 141a so that the one gas movement hole 141b and the one gas discharge hole 141a are adjacent to each other. Thus, the gas discharged from one gas discharge hole 141a may move to the communication hole 150a to be described later through the gas movement hole 141b adjacent to the gas discharge hole 141a.

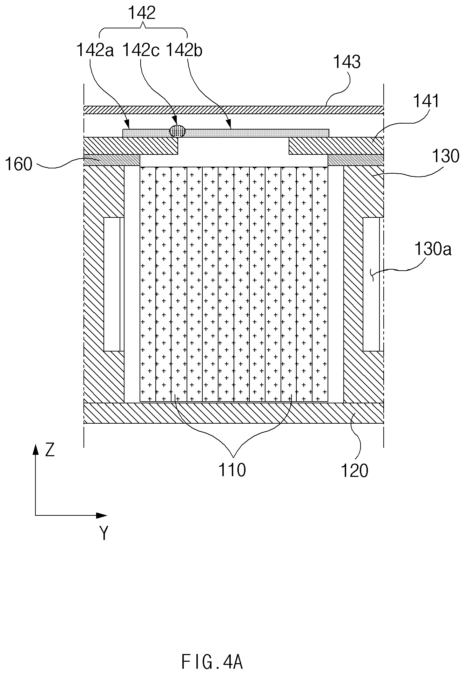

As illustrated in FIGS. 4a to 4b, the above-described gas discharge hole 141a may be opened and closed by the opening/closing part 142. Here, the opening/closing part 142 may be coupled to the base part 141 and may be understood as a configuration that opens or closes the gas discharge hole 141a at a position corresponding to the gas discharge hole 141a.

In more detail, as illustrated in FIG. 4a, when the gas is not generated in the separation space in which the secondary battery is disposed, and thus, the internal pressure of the separation space is equal to or less than an external pressure, the opening/closing part 142 may close the gas discharge hole 114a corresponding to the separation space to prevent the gas from being introduced into the separation space.

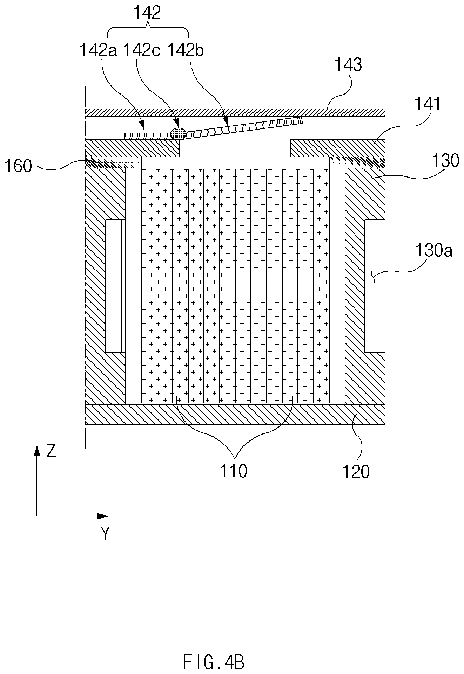

Also, as illustrated in FIG. 4b, when the gas is generated in a specific separation space in which the secondary battery 110 is disposed, and thus, the internal pressure of the separation space increases, the opening/closing part 142 may open the gas discharge hole 141a corresponding to the separation space to discharge the gas to the outside.

Thus, even if the secondary battery 110 disposed in the specific separation space is ignited to generate a high-temperature gas, the opening/closing part 142 may prevent the high-temperature gas from being introduced into the secondary battery 110 disposed in other separation spaces, thereby preventing the chain ignition of the secondary batteries 110 from occurring.

The opening/closing part 142 may have various structures.

For example, the opening/closing part 142 may include: a fixed part 142a fixedly coupled to the base part 141; and a rotatable part 142b rotatably connected from the fixed part 142a to open and close the gas discharge hole 141a.

Here, the fixed part 142a may be configured to be fixedly coupled to the base part 141 as illustrated in FIGS. 4a to 4b. In this case, the fixed part 142a may be fixedly coupled to the base part 141 by welding or bolting.

In addition, the rotatable part 142b may be configured to be rotatably connected from the fixed part 142a so as to open and close the gas discharge hole 141a and may have one end rotatably connected from the fixed part 142a and the other end provided to be in contact with the base part 141. Here, the rotatable part 142b may be rotatably provided to the fixed part 142a through a connection part 142c.

The upper frame 140 may further include a cover part 143 coupled to the base part 141 and disposed to be spaced a predetermined distance from the opening/closing part 142 at an upper side of the opening/closing part 142.

Here, as illustrated in FIG. 2, the cover part 143 may include: a cover plate 143a; and a plurality of protrusions 143b protruding from the cover plate 143a toward the base part 141 and coupled to the base part 141. Each of the protrusions 143b may extend along the longitudinal direction of the gas discharge hole 141a.

Here, the cover plate 143a may have various shapes. For example, the cover plate 143a may cover an upper side of each of the plurality of secondary batteries 110 while having a shape corresponding to the shape of the lower frame 120 described above.

In addition, the plurality of protrusions 143b may be spaced a predetermined distance from the cover plate 143a toward the base part 141 and may have various configurations.

Specifically, the protrusion 143b may protrude from the cover plate 143a to space the cover plate 143a from the above-described opening/closing part 142 so that the rotatable part 142b of the opening/closing part 142 is rotatable. In this case, the cover plate 143a and the opening/closing part 142 may be spaced apart from each other by a height of the protrusion 143b (length in the Z direction in FIG. 2).

In addition, the plurality of protrusions 143b may be spaced a predetermined distance from each other so as to be coupled to a region of the base part 141, in which the gas discharge hole 141a is not generated. In this case, the protrusion 143b may extend along the longitudinal direction of the gas discharge hole 141a from one end of the cover plate 143a to the other end opposite to the one end. In this case, the protrusion 143b may serve to isolate gases discharged from the plurality of gas discharge holes 141a from each other and guide movement of the gases to the above-described gas movement hole 141b.

In addition, the structure of the protrusion 143b of the cover part 143 may be regarded as an important technology as a core structure that is necessary for the gasket 160 to maintain the watertightness between the separation spaces in which the secondary batteries are divided. The cover part 143 may be coupled to the side frame 130 through a coupling bolt or the like. Here, if there is no protrusion 143b, in a process of coupling the coupling bolt to the side frame 130 by passing through the gasket 160, the gasket 160 may be lifted. In this case, the watertightness between the separation spaces in which the secondary batteries are divided may be failed. Therefore, the protrusion may play an important role in maintaining the watertightness between the separation spaces in which the secondary batteries are divided.

The secondary battery pack 100 according to the present invention may discharge the gas generated from the above-described separation spaces to the outside. In this case, the secondary battery pack 100 according to the present invention may further include a gas exhaust frame 150 coupled to the lower frame 120 to exhaust the gas discharged from the gas discharge hole 141a to the outside.

Specifically, the gas exhaust frame 150 may communicate with the above-described gas movement hole 141b of the base part 141 to exhaust the gas moving from the gas movement hole 141b to the outside.

For example, the gas exhaust frame 150 may include a body part 151 in which an accommodation space is defined; and a rupture part 152 coupled to the body part 151 and ruptured when a pressure in the accommodation space exceeds a predetermined pressure.

Specifically, the body part 151 may have the accommodation space therein to define a flow space of the gas introduced from the gas movement hole 141b. Here, the accommodation space may define one gas flow path. Here, since the free volume in which the gas generated in the entire secondary battery pack 100 flows is greater than a volume of the structure in which the accommodation space is divided to define a plurality of gas flow paths, a maximum pressure when the secondary battery 110 is ignited may be reduced to prevent structural deformation and destruction of the secondary battery pack 100 from occurring.

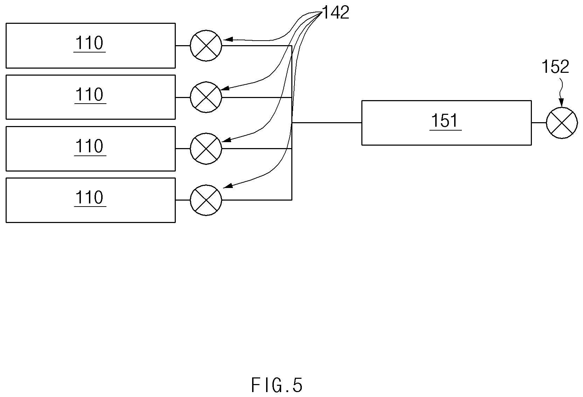

Referring to FIG. 5, the gas flow path of the present invention may be more easily understood. That is, FIG. 5 illustrates a state in which the gas generated from the plurality of secondary batteries 110 is discharged through the opening/closing part 142, and the gas discharged from the opening/closing part 142 flows by sharing one path in the accommodation space of the body part 151.

Here, although FIG. 5 illustrates the structure in which the plurality of opening/closing parts 142 are provided to correspond to the number of plurality of secondary batteries 110, the number of opening/closing parts 142 may be less than that of the plurality of secondary batteries 110. When the secondary batteries 110 are provided in predetermined number in the separation space, the number of secondary batteries 110 may correspond to the number of separation spaces.

The body part 151 may have at least one communication hole 150a allowing the gas movement hole 141b and the accommodation space to communicate with each other in one region and at least one exhaust hole 150b through which the gas of the accommodation space is exhausted to the outside in the other region.

Here, the communication hole 150a may be provided in plurality to correspond to the number of gas movement holes 141b and the position of the gas movement hole 141b. In this case, the accommodation space may provide one gas flow path, and the gas introduced from the plurality of communication holes 150a may pass through the accommodation space and then be exhausted to the outside through the exhaust hole 150b.

Here, the communication hole 150a and the exhaust hole 150b may be provided in various numbers in the body part 151.

For example, the plurality of communication holes 150a may be provided to correspond to the number of gas movement holes 141b described above, and a single exhaust hole 150b may be provided. That is, the gas introduced from the plurality of communication holes 150a may share one path in the inner accommodation space and may be exhausted to the outside through one exhaust hole 150b.

The rupture part 152 that is ruptured when a pressure in the accommodation space is greater than a predetermined pressure may be provided at a position corresponding to the exhaust hole 150b. The rupture part 152 may have mechanical rigidity less than that of the body part 151 and may be understood as a configuration that is ruptured when a pressure inside the accommodation space of the body part 151 exceeds a predetermined pressure.

That is, when the pressure of the accommodating space is less than the predetermined pressure, the rupture part 152 may be provided at a position corresponding to the exhaust hole 150b to seal the exhaust hole 150b, and when the pressure of the accommodating space is equal to or greater than the predetermined pressure, the rupture part 152 may be ruptured to open the exhaust hole 150b.

The rupture part 152 may be coupled to the body part 151 in various manner. For example, the rupture part 152 may be coupled to the body part 151 by welding or bolting or may adhere to the body part 151 through an adhesive material.

As described above, when the plurality of communication holes 150a correspond to the number of gas movement holes 141b described above in the body part 151, and the exhaust hole 150b is provided in one, the rupture part 152 provided to correspond to the exhaust hole 150b may also be provided as one. In this case, since there is no need to provide a plurality of rupture parts 152, manufacturing and management costs of the secondary battery pack 100 to which the rupture part 152 is applied may be minimized.

### Embodiment 2

Embodiment 2 of the present invention is different from Embodiment 1 in that the rupture part 152 is not provided on the gas exhaust frame 150 of Embodiment 1.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

That is, in Embodiment 2 of the present invention, since a rupture part 152 for sealing an exhaust hole 150b defined in a gas exhaust frame 150 is not provided, the exhaust hole 150b may be always remained in an opened state. Thus, a gas collected in an accommodation space may be quickly discharged to the outside.

However, if a large amount of gas collected in an accommodation space inside a body part 151 is discharged at once, there is a possibility that flame is generated inside or outside the secondary battery pack 100, and thus, the exhaust hole 150b may be preferably provided in an appropriate size and number.

Here, the size and number of exhaust holes 150b may be appropriately selected so that the gas inside the accommodation space is discharged to the outside at an appropriate discharge rate or discharged while being maintained at the appropriate discharge rate according to the needs of the operator.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

100: Secondary battery pack
110: Secondary battery
120: Lower frame
130: Side frame
130a: Groove
140: Upper frame
141: Base part
141a: Gas discharge hole
141b: Gas movement hole
142: Opening/closing part
142a: Fixed part
142b: Rotatable part
142c: Connection part
143: Cover part
143a: Cover plate
143b: Protrusion
150: Gas exhaust frame
150a: Communication hole
150b: Exhaust hole
151: Body part
152: Rupture part
160: Gasket

## Claims

1. A secondary battery pack comprising:
a plurality of secondary batteries;
a lower frame configured to support a lower portion of each of the plurality of secondary batteries;
a side frame provided in plurality to be spaced apart from each other to vertically extend from the lower frame so as to define a plurality of separation spaces; and
an upper frame provided above the side frame to open and close each of the plurality of separation spaces.

2. The secondary battery pack of claim 1, wherein the upper frame is configured to selectively open and close the separation spaces according to a pressure difference between the inside and outside of the separation space.

3. The secondary battery pack of claim 1, wherein the upper frame comprises:
a base part which is provided above the side frame and in which a plurality of gas discharge holes are defined to correspond to the positions of the separation spaces; and
at least one opening/closing part coupled to the base part and configured to open or close the gas discharge hole at a position corresponding to the gas discharge hole.

4. The secondary battery pack of claim 3, wherein the upper frame further comprises a cover part coupled to the base part and provided above the opening/closing part so as to be spaced a predetermined distance from the opening/closing part.

5. The secondary battery pack of claim 3, further comprising a gas exhaust frame coupled to the lower frame and configured to exhaust a gas discharged from the gas discharge hole to the outside.

6. The secondary battery pack of claim 5, wherein the base part has at least one gas movement holes through which the gas discharged from the gas discharge hole moves, and
the gas exhaust frame is configured to communicate with the gas movement hole so as to exhaust the gas moving from the gas movement hole to the outside.

7. The secondary battery pack of claim of claim 6, wherein the gas exhaust frame comprises:
a body part having an accommodation space therein; and
a rupture part coupled to the body part so as to be ruptured when a pressure of the accommodation space is equal to or greater than a predetermined pressure.

8. The secondary battery pack of claim of claim 7, wherein the body part has at least one communication hole, through which the gas movement hole and the accommodation space communicate with each other, in one region and at least one exhaust hole, through which a gas of the accommodation space is exhausted to the outside, in the other region, and
the rupture part is provided at a position corresponding to the exhaust hole.

9. The secondary battery pack of claim 3, wherein the gas discharge hole extends along a longitudinal direction of the secondary battery in the base part.

10. The secondary battery pack of claim 3, wherein the gas discharge hole extends along an arrangement direction of the secondary battery in the base part.

11. The secondary battery pack of claim 3, wherein the opening/closing part comprises:
a fixed part fixedly coupled to the base part; and
a rotatable part rotatably coupled to the fixed part to open and close the gas discharge hole.

12. The secondary battery pack of claim 11, wherein the fixed part is fixedly coupled to the base part by welding or bolting.

13. The secondary battery pack of claim 1, wherein at least one side frame of the plurality of side frames has a groove recessed inward in a surface facing the secondary battery.
